# DEMANDE DE BREVET EUROPEEN

(11) **EP 3 173 685 A1**
(43) Date de publication de la demande: **31.05.2017**
(21) Numéro de dépôt: 16200059.0
(22) Date de dépôt: 22.11.2016
(51) Int. Cl.: F21S 8/10

(54) **DISPOSITIF DE GESTION DE LA COULEUR D'UN ECLAIRAGE POUR VEHICULE AUTOMOBILE**

(30) Priorité: 26.11.2015 FR 1561409
(71) Demandeur: VALEO VISION, 93012 Bobigny Cedex (FR)
(72) Inventeur: ALBOU, Pierre, 75013 PARIS (FR)

(57) **Abrégé**

L'invention concerne un dispositif de contrôle de la couleur d'un rayonnement lumineux polychromatique, obtenu par un élément de conversion (4) apte à transformer un faisceau émis par une source monochromatique (2) en un rayonnement de lumière polychromatique.

Des premiers (6) et deuxièmes (8) moyens capteur sont placés pour intercepter une partie du rayonnement polychromatique réémis par l'élément de conversion. Chacun des moyens capteur est respectivement sensible à la longueur d'onde (λ1) du faisceau émis par la source et à une deuxième longueur d'onde (λ2), différente de la longueur d'onde du faisceau.

Des moyens de calcul (10) sont aptes à établir une relation (p) entre des signaux (S1, S2) représentatifs de la quantité de lumière reçus respectivement par ces capteurs, et un module de commande (11) fournit au moins une instruction de commande de la source et/ou de l'élément de conversion pour en modifier le fonctionnement, afin de modifier ladite relation.

## Description

La présente invention se rapporte au domaine de l'éclairage et/ou de la signalisation des véhicules automobiles et s'applique, plus particulièrement, aux dispositifs d'éclairage adaptatifs pour de tels véhicules.

Les véhicules automobiles sont couramment équipés de modules lumineux destinés à la fois à éclairer la route dans des situations de conduite dans lesquelles le conducteur a une visibilité réduite (nuit, intempéries, ...) et à assurer la visibilité du véhicule par les autre usagers de la route. Classiquement, plusieurs types d'éclairages coexistent sur un véhicule automobile, parmi lesquels, en particulier, un éclairage dit "de route" et un éclairage dit "de croisement". L'éclairage dit "de route" est réalisé au moyen de modules lumineux qui émettent un faisceau dirigé vers l'horizon et qui éclairent la totalité de la route sur la distance la plus longue possible, typiquement de l'ordre de 200 mètres avec les sources lumineuses actuellement couramment utilisées. L'éclairage dit "de croisement" est réalisé au moyen de modules lumineux qui émettent un faisceau légèrement incliné par rapport à l'horizontale, descendant, et délimité par un plan de coupure supérieure dont l'objet est d'éviter d'éblouir les autres usagers de la route. L'éclairage dit "de croisement" offre au conducteur une visibilité de l'ordre de quelques dizaines de mètres, typiquement 60 à 80 mètres. Cette visibilité, inférieure à celle offerte par l'éclairage "de route", est parfois insuffisante pour le conducteur.

Pour optimiser la visibilité du conducteur en toutes circonstances sans pénaliser les autres usagers de la route, des fonctions d'éclairage adaptatif (ou AFS, en anglais, pour "Adaptative Frontlighting System") ont été proposées. Ces fonctions d'éclairage adaptatif sont, par exemple, destinées à détecter la présence d'un usager de la route pouvant être ébloui par un faisceau d'éclairage "de route", et à modifier le contour de ce faisceau d'éclairage pour créer une zone d'ombre à l'endroit où se trouve l'usager détecté. Le conducteur du véhicule dispose ainsi d'une meilleure visibilité que celle offerte par un éclairage "de croisement", avec un éblouissement fortement réduit des autres usagers, et sans intervention de sa part, là où, actuellement, le changement de mode entre l'éclairage "de route" et l'éclairage "de croisement" est manuel, avec tous les risques d'oubli qu'un tel changement manuel comporte.

Avec de telles fonctions d'éclairage adaptatif, il est possible de mettre en oeuvre des sources lumineuses de forte puissance permettant d'obtenir un éclairage de la route sur une longue portée, mais sans risquer d'éblouir d'autres usagers de cette dernière. Parmi les sources lumineuses couramment utilisées pour obtenir des faisceaux lumineux de portée élevée, on connaît les sources à diodes électroluminescentes (ou sources DEL). Ces sources permettent, avec un encombrement réduit par rapport aux sources à incandescence, d'atteindre des puissances d'éclairage élevées pour une faible puissance consommée.

Un nouvel axe de développement concerne les sources lumineuses mettant en oeuvre des diodes laser. Permettant, pour une même puissance, d'obtenir une luminance plus élevée que les diodes électroluminescentes, les diodes laser permettent, en outre, la réalisation d'optiques plus compactes, ce qui augmente encore leurs possibilités d'intégration à un feu de véhicule automobile, ainsi que les possibilités esthétiques pour un tel feu et pour un tel véhicule.

La mise en oeuvre de telles diodes laser implique toutefois un certain nombre de contraintes. En effet, une diode laser émet un faisceau lumineux monochromatique (c'est-à-dire selon une seule longueur d'onde) et cohérent (c'est-à-dire que toutes les ondes lumineuses émises sont en phase). On connaît les dangers que comporte, pour l'oeil, l'exposition à de tels rayonnements. Il convient donc, pour l'utilisation de telles sources dans le domaine de l'éclairage et/ou de la signalisation automobile, de transformer un tel faisceau en un faisceau d'une lumière inoffensive pour l'oeil des personnes qui peuvent y être exposées. Ceci passe en particulier par la transformation du faisceau monochromatique en un faisceau de lumière polychromatique, par exemple un faisceau de lumière blanche. Pour réaliser cette transformation, il est connu d'interposer, entre la source laser monochromatique et l'oeil qui recevra son rayonnement, un matériau apte à transformer le faisceau lumineux monochromatique dirigé émis par la diode laser en un faisceau non dirigé polychromatique. Un tel matériau peut notamment contenir des matériaux phosphorescents, et par exemple du YAG dopé aux terres rares, pour former un moyen de conversion de longueur d'onde.

Il importe que le faisceau de lumière monochromatique émis par une telle source laser puisse être converti de façon optimale en un faisceau de lumière polychromatique et pour cela le rendement de conversion de l'élément contenant des matériaux phosphorescents, vers lequel le faisceau lumineux issu de la source laser est, dans un premier temps, dirigé, doit être optimal. Par ailleurs, la sécurité d'un tel système dépend de l'intégrité du matériau de conversion, intégrité que l'invention vise à préserver sans éteindre le dispositif (ce qui est dangereux pour un faisceau d'éclairage principal), tout en optimisant l'efficacité optique du système.

La présente invention a pour but de proposer un dispositif de contrôle de la conversion du faisceau de lumière monochromatique émis par une ou plusieurs diodes laser en un rayonnement de lumière polychromatique.

Dans ce but, l'invention a pour objet un dispositif de contrôle de la couleur d'un rayonnement lumineux polychromatique, dans lequel un faisceau lumineux, émis par une source monochromatique cohérente, est dirigé vers un élément de conversion apte à transformer ce faisceau de lumière monochromatique en un rayonnement de lumière polychromatique non dirigé, et qui comporte au moins des premiers moyens capteur sensibles à la longueur d'onde du faisceau de lumière émis par la source monochromatique et apte à fournir un premier signal, représentatif de la quantité de lumière qu'il a reçue selon cette première longueur d'onde, et des deuxièmes moyens capteur sensibles à une deuxième longueur d'onde, différente de la première longueur d'onde du faisceau de lumière émis par la source monochromatique, et apte à fournir un deuxième signal, représentatif de la quantité de lumière qu'il a reçue selon cette deuxième longueur d'onde.

On prévoit en outre d'équiper le dispositif de contrôle de moyens de calcul pour établir une relation entre les signaux fournis par les premiers moyens capteur et par les deuxièmes moyens capteur, et d'un module pour générer des instructions de commande de la variation d'au moins un paramètre gouvernant les caractéristiques du rayonnement de lumière polychromatique converti pour faire varier la relation établie entre les signaux fournis par les premiers moyens capteur et par les deuxièmes moyens capteur.

Ce module peut comporter notamment des moyens de consigne, préalablement étalonnés pour obtenir une ou plusieurs valeurs de référence de la relation établie entre les signaux délivrés par les premiers et les deuxièmes moyens capteurs, des moyens de comparaison de cette relation aux valeurs prédéfinies dans les moyens de consigne, aptes à générer un troisième signal représentatif du résultat de cette comparaison, et des moyens de commande aptes à fournir une instruction de commande, en fonction de la valeur du troisième signal, de la source monochromatique et/ou de l'élément de conversion. Notamment, on pourra prévoir que les moyens de consigne comprennent au moins une valeur de consigne correspondant à une valeur optimale prédéfinie de la relation établie par les moyens de calcul, ainsi qu'une valeur maximale et une valeur minimale admissibles de cette même relation.

Avantageusement le module selon l'invention comprend des moyens d'asservissement de la source monochromatique et/ou de l'élément de conversion à un signal de consigne, notamment au troisième signal résultant de la comparaison de la relation établi à partir des signaux respectivement fournis par les premiers et deuxièmes moyens capteurs, à un ensemble de valeurs de consigne préalablement définies.

Avantageusement, les moyens de comparaison peuvent comporter des moyens de normalisation de la relation établie par les moyens de calcul.

Avantageusement les moyens d'asservissement permettent en temps réel et de manière continue de modifier les paramètres de la source monochromatique et/ou de l'élément de conversion afin de maintenir en dessous d'une valeur limite l'écart entre la relation établi à partir des signaux respectivement fournis par les premiers et deuxièmes moyens capteurs et une valeur de consigne de ladite relation.

Avantageusement les moyens d'asservissement sont agencés pour asservir la couleur émise par le dispositif d'éclairage à une couleur de consigne, c'est-à-dire, dans le cas où ladite couleur émise dérive, de la modifier, pour la rapprocher de ladite couleur de consigne, avant qu'elle ne sorte d'une ellipse de MacAdam de ladite couleur de consigne, ou bien avant qu'elle ne sorte des limites imposées par les réglementations.

En effet il importe, afin de respecter les réglementations et d'assurer le confort d'une personne observant le faisceau de lumière émise par le dispositif d'éclairage, que la couleur de ladite lumière reste proche d'une couleur de consigne. Une telle couleur peut en effet changer sous l'effet de certains paramètres tels que par exemple l'alimentation de la source monochromatique, la saturation optique du matériau apte à transformer le faisceau lumineux monochromatique dirigé émis par la diode laser en un faisceau non dirigé polychromatique, ou sa température.

Selon des caractéristiques de l'invention, les paramètres qui gouvernent les caractéristiques du rayonnement converti et sur lesquels le dispositif selon l'invention agit pour faire varier la relation établie entre les signaux fournis par les premiers et deuxièmes moyens capteur peuvent inclure des paramètres intrinsèques à la source monochromatique et/ou des paramètres intrinsèques à l'élément de conversion. A titre d'exemples non exhaustifs, ces paramètres peuvent inclure la température de l'élément de conversion, et/ou la puissance moyenne d'émission de la source monochromatique : la source monochromatique peut être modulée à haute fréquence pour afficher une image, dans ce cas on contrôle la puissance moyenne sur la trame.

Les premiers moyens capteur et les deuxièmes moyens capteur peuvent être placés à proximité l'un de l'autre, de manière à intercepter une partie du rayonnement polychromatique non dirigé converti par l'élément de conversion. Ainsi, on s'assure que les conditions environnementales sont sensiblement les mêmes pour chacun des capteurs et que celles-ci ne sont dès lors pas considérées lorsque l'on fait le ratio des mesures de chacun des capteurs. On pourra notamment prévoir que le premier capteur et le deuxième capteur sont portés par un même moyen de support ou réalisés sur un même substrat semiconducteur.

Le premier capteur et/ou le deuxième capteur sont munis d'un filtre apte à qualifier la longueur d'onde des rayons détectés par le(s)dit(s) capteur(s). Ainsi, on s'assure que chaque capteur reçoit des rayons dont la longueur d'onde s'étale sur une plage de valeurs réduite. Ces deux capteurs peuvent être dans ce contexte munis l'un d'un filtre passe-haut et l'autre d'un filtre passe-bas, éventuellement complémentaire.

Selon un mode de réalisation préféré de l'invention, l'élément de conversion apte à transformer le faisceau de lumière monochromatique en un rayonnement de lumière polychromatique est réalisé dans un matériau phosphorescent et/ou fluorescent, et se présente schématiquement sous la forme d'une plaque. Les luminophores utilisés sont choisis de manière à ce que le rayonnement polychromatique converti contienne, entre autres, la longueur d'onde selon laquelle la source monochromatique émet.

Avantageusement, les premiers moyens capteur sont sensibles à une plage de longueurs d'onde limitée située au tour de la longueur d'onde de la source, notamment pour couvrir les dérives de longueur d'onde de celle-ci thermiquement induites. Les seconds moyens capteur sont sensible à un longueur d'onde caractéristique des luminophores : par exemple pour les matériaux de conversion usuels, le vert.

Selon un mode de réalisation préféré, mais non exclusif, de l'invention, la source émettrice du faisceau de lumière monochromatique est une diode laser émettant un faisceau dont la longueur d'onde se situe dans le domaine bleu du spectre visible. Avantageusement, le deuxième capteur du dispositif selon l'invention est alors choisi essentiellement sensible à une longueur d'onde différente : à titre d'exemple non exclusif, on pourra choisir un capteur essentiellement sensible à une longueur d'onde située dans le domaine vert du spectre lumineux visible.

Selon des variantes de l'invention, on pourra prévoir que les premier et deuxième capteurs sont placés, au regard de l'élément de conversion, du même côté que la source monochromatique, ou qu'au contraire, ils sont placés, au regard de cet élément de conversion, à l'opposé de la source monochromatique. Dans le premier cas, l'élément de conversion pourra être muni, en sa face opposée à sa face de réception du faisceau lumineux monochromatique dirigé, d'un élément réflecteur. Ainsi, on s'assure d'une quantité optimale de rayons convertis déviés en direction des capteurs, alors que le phénomène de conversion par les luminophores est de de type lambertien, c'est-à-dire que les rayons convertis partent de la plaque de phosphore dans toutes les directions. Les premier et deuxième capteurs pourront être placés sensiblement dans le cône de réflexion spéculaire au regard de l'élément de conversion et de l'incidence du faisceau monochromatique dirigé sur celui-ci.

L'invention s'étend également à un module lumineux pour l'éclairage et/ou la signalisation d'un véhicule automobile, qui comporte un dispositif de contrôle de la couleur d'un rayonnement lumineux polychromatique tel que décrit ci-dessus, et dans lequel l'élément de conversion est placé dans un plan focal d'un dispositif de formation d'un faisceau lumineux d'éclairage et/ou de signalisation dudit véhicule, par exemple, une lentille.

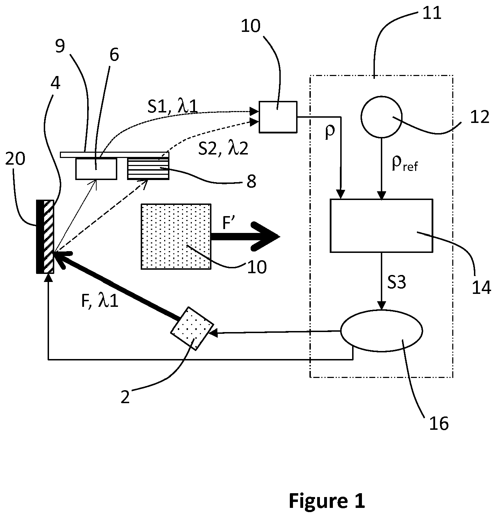

D'autres caractéristiques, détails et avantages de l'invention ressortiront plus clairement à la lecture de la description donnée ci-après à titre indicatif, en relation avec la figure 1, qui est une vue schématique d'un mode de réalisation préféré d'un dispositif selon l'invention, appliqué à un module lumineux d'éclairage et/ou de signalisation pour un véhicule automobile.

Dans ce qui suit, on désignera par "source monochromatique" un ensemble apte à émettre un faisceau de lumière monochromatique. Un tel ensemble peut être constitué d'une ou plusieurs diodes de type laser, mais il peut également, outre de telles diodes, comporter une ou plusieurs optiques intermédiaires de mise en forme. Il peut aussi comporter un ou plusieurs ensembles de miroirs sur lesquels le ou les faisceaux émis par la ou les diodes laser sont dirigés, comme c'est le cas dans les ensembles connus sous la dénomination anglo-saxonne "MEMS" (Micro-ElectroMechanical System) dans lesquels un faisceau monochromatique cohérent émis par une ou plusieurs diodes laser est déplacé, par déplacement d'un ou plusieurs miroirs sur lesquels il est dirigé, par exemple pour réaliser des fonctions d'éclairage adaptatif. La dénomination générique "source monochromatique" sera utilisée dans ce qui suit pour désigner ce type de source de lumière, qu'elle comporte ou non d'autres éléments qu'une ou plusieurs diodes laser.

La figure 1 illustre un mode de réalisation privilégié, mais non exclusif, d'un dispositif selon l'invention, dans son application à la réalisation d'un module d'éclairage et/ou de signalisation pour un véhicule automobile.

Un faisceau lumineux monochromatique F est ici émis par une source de lumière monochromatique cohérente 2. Comme il a été indiqué ci-dessus, la source monochromatique 2 comprend au moins une diode laser, mais peut comprendre également, à titre d'exemples non exhaustifs, d'autres éléments tels que collimateur, ensemble de miroirs, etc... Selon un mode de réalisation privilégié, mais non exclusif, de l'invention, la longueur d'onde λ1 de la lumière émise par la source monochromatique 2 se situe dans le domaine bleu du spectre visible.

Le faisceau monochromatique F est dirigé vers un élément de conversion de longueur d'ondes 4, dont le rôle est de convertir le faisceau monochromatique dirigé F en un rayonnement polychromatique selon toutes les directions de l'espace. Selon l'invention, les longueurs d'onde du rayonnement polychromatique sortant comprennent un ensemble de longueurs d'onde différentes de la première longueur d'onde λ1 selon laquelle la source monochromatique 2 émet, étant entendu qu'une partie de la lumière d'excitation peut être diffusée plutôt que convertie. Avantageusement, l'élément de conversion 4 se présente sous la forme d'une plaque réalisée dans un matériau phosphorescent.

Selon le mode de réalisation illustré par la Figure 1, la face arrière de la plaque constituant l'élément de conversion 4, opposée à la face qui reçoit le faisceau de lumière monochromatique F, est revêtue d'une couche 20 d'un matériau réfléchissant. Le rayonnement polychromatique en sortie de cet élément de conversion 4 est ainsi orienté du même côté dudit élément de conversion que celui par lequel ce dernier reçoit le faisceau monochromatique F. Une telle configuration permet d'éviter, en cas de défaillance de l'élément de conversion 4, toute transmission de tout ou partie du faisceau de lumière monochromatique à travers ledit élément de conversion et, ainsi, tout endommagement éventuel de composants situés derrière cet élément de conversion.

Selon l'invention, des premiers moyens capteur 6 et des deuxièmes moyens capteur 8, comprenant respectivement au moins un élément capteur, sont placés à proximité l'un de l'autre, dans le rayonnement polychromatique non dirigé réémis par l'élément de conversion 4, de manière à intercepter une partie de celui-ci. La proximité permet aux deux éléments capteurs d'être portés par un même moyen de support 9. Tel que cela sera précisé ci-après, il est particulièrement intéressant que les deux moyens capteurs 6, 8 soient ainsi soumis aux mêmes conditions de fonctionnement au sein du module lumineux (température, rayonnements, etc...).

Selon le mode de réalisation illustré par la Figure 1, les premier et deuxième moyens capteur 6 et 8 sont placés du même côté de l'élément de conversion 4 que la source 2 émettrice du faisceau de lumière monochromatique F. Avantageusement, selon ce mode de réalisation, les premier et deuxième moyens capteur 6 et 8 sont placés sensiblement dans le cône de réflexion spéculaire par rapport à la plaque constituant l'élément de conversion 4.

Selon l'invention, les premiers moyens capteur 6 sont choisis, d'une part, pour être sensibles à la longueur d'onde λ1 du faisceau de lumière monochromatique F, et, d'autre part, pour être aptes à délivrer un premier signal S1 représentatif de la quantité de lumière qu'ils détectent selon cette première longueur d'onde λ1. Selon l'invention, les deuxièmes moyens capteur 8 sont choisis, d'une part, pour être sensibles à une deuxième longueur d'onde, λ2, du rayonnement polychromatique converti, différente de la première longueur d'onde λ1 du faisceau monochromatique F et, d'autre part, pour être aptes à délivrer un deuxième signal S2 représentatif de la quantité de lumière qu'ils détectent selon cette deuxième longueur d'onde λ2. Avantageusement, la deuxième longueur d'onde λ2 à laquelle sont sensibles les deuxièmes moyens capteur 8 est différente de la longueur d'onde λ1 du faisceau monochromatique F, mais proche de cette dernière. Ainsi, selon un mode de réalisation privilégié, mais non exclusif, de l'invention, dans lequel la première longueur d'onde, λ1, du faisceau monochromatique F se situe dans le domaine bleu du spectre visible, la deuxième longueur d'onde λ2 à laquelle sont sensibles les deuxièmes moyens capteur 8 est choisie dans le domaine vert du spectre visible. On comprend qu'une variation du rendement de conversion de l'élément de conversion 4 se traduit par une variation de la quantité de lumière convertie, en particulier, selon la deuxième longueur d'onde λ2. Selon l'invention, ces deux variations sont reliées entre elles par une loi déterminée de sorte que la mesure d'une variation de quantité de lumière détectée par les moyens capteurs donne une information sur l'état de dégradation de l'élément de conversion 4.

Sur un plan pratique, les premiers et les deuxièmes moyens capteur peuvent comporter chacun au moins un filtre et un élément capteur associé. La ou les filtres sont aptes à limiter la gamme de longueurs d'onde détectables par l'élément capteur associé. On comprend que le choix de filtre sera lié au choix de longueur d'onde que l'on souhaite mesurer. A titre d'exemple, un filtre de type passe-bas peut être disposé en amont de l'élément capteur des premiers moyens capteur 6 sur le trajet des rayons réfléchis et réémis par l'élément de conversion, et un filtre de type passe-haut peut être disposé de façon similaire en amont du capteur des deuxièmes moyens capteur 8, dans un mode de réalisation de l'invention dans lequel la longueur d'onde λ2 à laquelle est sensible le deuxième capteur 8 est supérieure à la longueur d'onde λ1 du faisceau monochromatique F. Sur un plan pratique également, les signaux S1 et S2 respectivement délivrés par les premier et deuxième moyens capteurs 6 et 8 ont la forme de courants électriques émis par ces capteurs.

Le dispositif selon l'invention comporte également des moyens de calcul 10 aptes à établir une relation p entre les signaux S1 et S2 respectivement délivrés par les premiers et deuxièmes moyens capteurs. Avantageusement, les moyens de calcul 10 établissent le rapport S1/S2 du signal délivré par les premiers moyens capteur 6 au signal délivré par les deuxièmes moyens capteur 8. Selon un mode de réalisation préféré de l'invention, les moyens de calcul 10 comportent un ou plusieurs composants aptes à réaliser un calcul rapide, avantageusement à une cadence vidéo. Ceci permet de traiter les signaux S1 et S2 délivrés par les premiers et deuxièmes moyens capteur à intervalles de temps très réguliers et rapprochés et, ainsi d'en connaître l'évolution en temps réel.

Une augmentation du rapport S1/S2 établi entre les signaux délivrés par les premiers et les deuxièmes moyens capteur signifie que, dans le rayonnement polychromatique réémis par l'élément de conversion 4, la quantité de lumière présente, selon la première longueur d'onde λ1, augmente, et/ou que la quantité de lumière présente, selon la deuxième longueur d'onde λ2, diminue. Une augmentation du rapport S1/S2 est donc représentative d'une diminution d'efficacité de la conversion du faisceau monochromatique F en un rayonnement polychromatique. Cette diminution d'efficacité peut résulter de différentes causes. En particulier, elle peut résulter de causes propres à la source monochromatique 2 ou elle peut résulter de causes propres à l'élément de conversion 4. Par exemple, une telle diminution peut être liée à une forme de saturation de l'élément de conversion 4 par le faisceau monochromatique F : c'est, par exemple, le cas, si la quantité de lumière monochromatique à convertir est trop importante pour la quantité de matériau apte à effectuer cette conversion. Une partie de la lumière du faisceau monochromatique F n'est alors pas convertie en rayonnement polychromatique. La quantité de molécules, ions (en général, centres colorés), excités au sein de l'élément de conversion 4 n'est plus suffisante pour réagir avec l'ensemble de la lumière monochromatique et la lumière réémise tend vers la couleur monochromatique d'origine, ici le bleu. D'autres causes de la diminution de l'efficacité de la conversion du faisceau monochromatique F en un rayonnement polychromatique peuvent être liées à l'élément de conversion lui-même : en particulier, on sait que le rendement de conversion d'un matériau tel que le phosphore diminue avec la température. Une température trop élevée de l'élément de conversion 4 peut donc induire rapidement une dégradation de la conversion du faisceau monochromatique F par celui-ci. Dans le cas extrême où l'élément de conversion 4 deviendrait inapte à réaliser la conversion du faisceau monochromatique F en un rayonnement polychromatique, la quantité de lumière réémise par cet élément de conversion 4 selon la deuxième longueur d'onde λ2 deviendrait nulle, et le rapport S1/S2, infini. A l'inverse, en cas d'arrêt de la source monochromatique 2, le rapport S1/S2 deviendra nul.

L'invention propose, pour optimiser le rendement de l'élément de conversion 4, de comparer la relation p, ici le rapport S1/S2, établie entre les signaux délivrés par les premiers et deuxièmes moyens capteur à une ou plusieurs valeurs de référence, puis, sur la base du résultat de cette comparaison, d'agir sur la source monochromatique 2 et/ou sur l'élément de conversion 4 lui-même pour que cette relation p reste dans un écart prédéfini par rapport à ces valeurs de référence.

A cette fin, le dispositif selon l'invention comporte un module de commande 11 qui comprend, en particulier :
- des moyens de consigne 12, préalablement étalonnés pour obtenir une ou plusieurs valeurs de référence de la relation p établie entre les signaux délivrés par les premiers et deuxièmes moyens capteurs: à titre d'exemples non exhaustifs, une valeur optimale de la relation p, correspondant à un rendement optimal de l'élément de conversion 4, une valeur maximale et une valeur minimale de la relation p, définissant les limites de fonctionnement acceptable de l'élément de conversion 4 au regard de la source monochromatique 2,
- des moyens de comparaison 14 de la relation p aux valeurs prédéfinies dans les moyens de consigne 12, aptes à générer un troisième signal S3 représentatif du résultat de cette comparaison,
- des moyens de commande 16 aptes à agir, en fonction de la valeur du troisième signal S3, sur la source monochromatique 2 et/ou sur l'élément de conversion 4 pour en modifier le fonctionnement de manière à modifier la relation ρ.

En d'autres termes, le dispositif selon l'invention comprend des moyens d'asservissement de la source monochromatique 2 et/ou de l'élément de conversion 4 au troisième signal S3 résultant de la comparaison de la relation p, établi à partir des signaux S1 et S2 respectivement fournis par les premiers et deuxièmes moyens capteurs, à un ensemble de valeurs de consigne préalablement définies. Avantageusement, les moyens de comparaison 14 peuvent comporter des moyens de normalisation de la relation p établie par les moyens de calcul 10.

Ces moyens d'asservissement permettent, en temps réel, c'est-à-dire à une cadence suffisamment rapprochée pour éviter une dérive de la relation ρ, et de manière continue, c'est-à-dire progressivement, de modifier les paramètres de la source monochromatique 2 et/ou de l'élément de conversion 4 afin de maintenir cette relation p proche d'une valeur de consigne. On comprend par dérive de la relation p par exemple une dérive telle que la couleur mesurée de la lumière émise par le dispositif d'éclairage sorte d'une l'ellipse de MacAdam centrée sur le point de couleur de la couleur de consigne. L'ellipse de MacAdam détermine la zone tracée dans un diagramme chromatique, autour du point de couleur d'une couleur prédéterminée, telle qu'un observateur humain moyen ne distingue aucune différence entre l'une quelconque des couleurs de ladite zone avec ladite couleur prédéterminée. Par ailleurs une dérive la relation p peut conduire ladite couleur à sortir de limites imposées par les réglementations.

Ainsi, grâce à ces moyens d'asservissement, il est possible de maintenir ladite couleur émise assez proche d'une couleur de consigne, c'est-à-dire, dans le cas où elle dérive, de la modifier avant qu'elle ne sorte d'une l'ellipse de MacAdam de ladite couleur de consigne, autrement dit avant qu'un observateur humain moyen puisse se rendre compte d'un écart avec cette couleur de consigne, ou bien avant qu'elle ne sorte des limites imposées par les réglementations.

Autrement dit les moyens d'asservissement sont agencés pour asservir la couleur émise par le dispositif d'éclairage à une couleur de consigne, c'est-à-dire, dans le cas où ladite couleur émise dérive, de la modifier, pour la rapprocher de ladite couleur de consigne, avant qu'elle ne sorte d'une l'ellipse de MacAdam de ladite couleur de consigne, ou bien avant qu'elle ne sorte des limites imposées par les réglementations.

Plus précisément, les moyens de commande 16 peuvent, par exemple, commander la puissance de la source monochromatique 2 pour la diminuer ou l'augmenter. Les moyens de commande 16 peuvent ainsi diminuer ou augmenter la quantité de lumière reçue de la source monochromatique 2 par l'élément de conversion 4 selon la première longueur d'onde λ1, et donc, à rendement constant de l'élément de conversion 4, diminuer ou augmenter la quantité de lumière réémise par ce dernier, en particulier selon la deuxième longueur d'onde λ2.

Dans le cas où la source monochromatique 2 comprend, par exemple, un ensemble de miroirs destinés à déplacer le faisceau monochromatique F, les moyens de commande 16 peuvent agir sur ces derniers pour déplacer ledit faisceau F, par exemple à intervalles de temps prédéfinis, vers une zone opaque d'absorption de la lumière qui est voisine de l'élément de conversion et qui est ici non représentée. Ainsi, on peut modifier la quantité de lumière selon la première longueur d'onde λ1 qui arrive sur l'élément de conversion 4, et donc, à rendement constant de l'élément de conversion 4, modifier la quantité de lumière réémise par celui-ci, en particulier selon la deuxième longueur d'onde λ2. Dans ce dernier cas, c'est une modification du profil temporel d'émission de la source monochromatique qui se traduira par une modification de la quantité de lumière monochromatique reçue et convertie par l'élément de conversion 4.

Les moyens de commande 16 peuvent également agir sur l'élément de conversion 4 pour modifier son rendement, à puissance émise par la source monochromatique 2 constante et prédéfinie. Par exemple, les moyens de commande 16 peuvent agir sur des moyens de refroidissement de l'élément de conversion 4 (non représentés sur la Figure 1), puisqu'il est connu que le rendement de celui-ci diminue lorsque sa température augmente.

L'invention permet ainsi, par un ensemble de moyens simples et de mise en oeuvre aisée, de réaliser un contrôle de la couleur du rayonnement polychromatique converti, par un élément de conversion 4, à partir d'un faisceau monochromatique F. En basant ce contrôle sur l'analyse de la relation p établie entre les signaux délivrés par des premiers moyens capteur 6 et par des deuxièmes moyens capteur 8 sensibles, respectivement, à la première longueur d'onde λ1 du faisceau monochromatique F et à une deuxième longueur d'onde λ2 du rayonnement polychromatique sortant différente de la première longueur d'onde λ1, l'invention permet de s'affranchir d'erreurs ou de variations liées aux capteurs eux-mêmes (variations de température des capteurs, par exemple). Et cela est d'autant plus pertinent que les capteurs sont placés très proches dans le module lumineux, de sorte qu'ils sont soumis à des contraintes similaires.

Il est à noter que l'invention ne saurait se réduire aux moyens et configurations décrits et illustrés, mais elle s'applique également à tous moyens ou configurations équivalents et à toute combinaison de tels moyens. Quel que soit le mode de mise en oeuvre retenu, un tel dispositif de contrôle trouve un intérêt particulier dans la réalisation d'un module lumineux pour l'éclairage et/ou la signalisation d'un véhicule automobile. Avantageusement, dans ce cas, l'élément de conversion 4 est placé sensiblement dans un plan focal d'un dispositif de formation d'un faisceau lumineux F' à partir du rayonnement polychromatique converti, par exemple un plan focal d'une lentille 18 comme le montre la figure 1.

Selon le mode de réalisation décrit ci-dessus et illustré par la Figure 1, premiers moyens capteur 6, deuxièmes moyens capteur 8, et source monochromatique 2 sont situés du même côté de l'élément de conversion 4, et c'est la partie réfléchie du rayonnement polychromatique sortant qui est envoyée vers les premier et deuxième capteurs. Un réflecteur 20 est alors placé à l'arrière de l'élément de conversion 4, pour que la partie réfractée soit renvoyée du même côté de l'élément de conversion 4 que la partie réfléchie, et pour qu'un maximum de rayonnement converti soit dirigé vers lesdits capteurs.

Selon un mode de réalisation alternatif de l'invention, non représenté, les premiers et deuxièmes moyens capteur 6 et 8 peuvent être disposés à l'opposé de la source monochromatique par rapport à l'élément de conversion 4. Le rayonnement polychromatique est alors transmis au travers de l'élément de conversion 4, qui ne comporte alors pas de dispositif réflecteur 20.

Selon un autre mode de réalisation alternatif, les premiers et deuxièmes moyens capteur 6 et 8 peuvent être, comme dans le mode illustré, disposés du même côté que la source monochromatique par rapport à l'élément de conversion 4, mais être également du même côté que la source par rapport à l'axe optique passant par le centre de la lentille 18 et étant normal au dispositif réflecteur 20. Les moyens capteurs sont ainsi placés au voisinage de la source et ils sont impactés par les rayons convertis, pour la réalisation des mesures selon l'invention, après réflexion sur un miroir disposé à l'opposé des capteurs et de la source par rapport à cet axe optique.

## Revendications

1. Dispositif de contrôle de la couleur d'un rayonnement lumineux polychromatique, dans lequel un faisceau lumineux (F), émis par une source monochromatique cohérente (2), est dirigé vers un élément de conversion (4) apte à transformer ce faisceau (F) de lumière monochromatique dirigée en un rayonnement de lumière polychromatique non dirigé, et qui comporte au moins :
- des premiers moyens capteur (6) sensibles à la longueur d'onde (λ1) du faisceau de lumière émis par la source monochromatique (2) et aptes à fournir un premier signal (S1) représentatif de la quantité de lumière qu'il a reçue selon cette première longueur d'onde (λ1),
- des deuxièmes moyens capteur (8) sensibles à une deuxième longueur d'onde (λ2), différente de la première longueur d'onde (λ1) du faisceau de lumière (F) émis par la source monochromatique (2), et aptes à fournir un deuxième signal (S2) représentatif de la quantité de lumière qu'il a reçue selon cette deuxième longueur d'onde (λ2),
- des moyens de calcul (10) aptes à établir une relation (p) entre le premier signal (S1) et le deuxième signal (S2), et
- un module de commande (11) apte à fournir des instructions de commande de la source monochromatique (2) et/ou de l'élément de conversion (4) pour en modifier le fonctionnement de manière à modifier la relation (p).

2. Dispositif selon la revendication 1, **caractérisé en ce que** le module de commande (11) comporte au moins des moyens de comparaison (14) de ladite relation (p) avec des valeurs prédéfinies, pour générer un troisième signal (S3) représentatif du résultat de cette comparaison pour l'élaboration des instructions de commande.

3. Dispositif selon la revendication 2, **caractérisé en ce que** ledit module de commande (11) comporte des moyens de commande (16) aptes à générer lesdites instructions de commande en fonction du troisième signal (S3) fourni par les moyens de comparaison (14).

4. Dispositif selon l'une des revendications 2 ou 3, **caractérisé en ce que** lesdites valeurs prédéfinies sont fournies en entrée desdits moyens de comparaison (14) par des moyens de consigne (12) comportant un ensemble de valeurs prédéfinies.

5. Dispositif selon la revendication précédente, **caractérisé en ce que** les moyens de consigne (12) comprennent au moins une valeur de consigne correspondant à une valeur optimale prédéfinie de la relation (p) établie par les moyens de calcul (10), ainsi qu'une valeur maximale et une valeur minimale admissibles de cette même relation.

6. Dispositif selon l'une quelconque des revendications précédentes, **caractérisé en ce que** les instructions de commande générées par ledit module de commande (11) sont aptes à contrôler la source monochromatique (2) pour en modifier la puissance émise.

7. Dispositif selon l'une quelconque des revendications précédentes, **caractérisé en ce que** les instructions de commande générées par ledit module de commande (11) sont aptes à contrôler l'élément de conversion (4) pour en modifier la température.

8. Dispositif selon l'une des revendications précédentes, **caractérisé en ce que** les premiers moyens capteur (6) et les deuxièmes moyens capteur (8) sont placés à proximité l'un de l'autre, de manière à intercepter une partie du rayonnement polychromatique non dirigé converti par l'élément de conversion (4).

9. Dispositif selon la revendication précédente, **caractérisé en ce que** les premiers moyens capteur (6) et les deuxièmes moyens capteur (8) sont portés par un même moyen de support (9).

10. Dispositif selon l'une des revendications précédentes, **caractérisé en ce que** le premier capteur (6) et/ou le deuxième capteur (8) sont munis d'un filtre apte à qualifier la longueur d'onde des rayons détectés par le(s)dit(s) capteur(s).

11. Dispositif selon la revendication précédente, **caractérisé en ce que** les deux moyens capteurs (6, 8) sont munis l'un d'un filtre passe-haut et l'autre d'un filtre passe-bas.

12. Dispositif selon l'une quelconque des revendications précédentes, **caractérisé en ce que** la deuxième longueur d'onde (λ2), à laquelle sont sensibles les deuxièmes moyens capteur (8), est proche de la première longueur d'onde (λ1) de la lumière émise par la source monochromatique (2).

13. Dispositif selon l'une des revendications précédentes, dans lequel la première longueur d'onde (λ1) de la lumière émise par la source monochromatique (2) se situe dans le domaine bleu du spectre visible.

14. Dispositif selon les revendications 12 et 13, dans lequel la deuxième longueur d'onde (λ2), à laquelle sont sensibles les deuxièmes moyens capteur (8), se situe dans le domaine vert du spectre visible.

15. Dispositif selon l'une des revendications 13 ou 14, **caractérisé en ce que** l'élément de conversion (4) contient des matériaux phosphorescents et/ou fluorescents.

16. Dispositif selon l'une quelconque des revendications précédentes, **caractérisé en ce que** les premiers et deuxièmes moyens capteur (6, 8) sont placés, au regard de l'élément de conversion (4), du même côté que la source monochromatique (2).

17. Dispositif selon la revendication précédente, **caractérisé en ce que** l'élément de conversion (4) est muni, en sa face opposée à sa face de réception du faisceau lumineux monochromatique dirigé (F), d'un élément réflecteur (20).

18. Dispositif selon la revendication précédente, **caractérisé en ce que** les premiers et deuxièmes moyens capteurs (6, 8) sont placés sensiblement dans le cône de réflexion spéculaire au regard de l'élément de conversion (4) et de l'incidence du faisceau monochromatique dirigé (F) sur celui-ci.

19. Dispositif selon l'une quelconque des revendications 1 à 15, **caractérisé en ce que** les premiers et deuxièmes moyens capteurs (6, 8) sont placés, au regard de l'élément de conversion (4), à l'opposé de la source monochromatique (2).

20. Module lumineux pour l'éclairage et/ou la signalisation d'un véhicule automobile, **caractérisé en ce qu'**il comporte au moins un dispositif selon l'une quelconque des revendications 1 à 19, et **en ce que** l'élément de conversion (4) de ce dispositif est sensiblement placé dans un plan focal d'un ensemble (10) de formation d'un faisceau lumineux polychromatique (F') d'éclairage et/ou de signalisation du véhicule.
